# EUROPEAN PATENT SPECIFICATION

(11) **EP 4 059 867 B1**
(45) Date of publication and mention of the grant of the patent: **24.01.2024**
(21) Application number: 22171659.0
(22) Date of filing: 08.09.2020
(51) Int. Cl.: B65D 77/20

(54) **RECYCLABLE CONTAINER AND LIDDING CONSTRUCTION**
RECYCELBARE BEHÄLTER- UND DECKELKONSTRUKTION
RÉCIPIENT RECYCLABLE ET CONSTRUCTION D'OPERCULAGE

(30) Priority: 18.11.2019 US 201916687013
(43) Date of publication of application: 21.09.2022
(62) Divisional of application: 20195157.1
(73) Proprietor: Sonoco Development, Inc., Hartsville, SC 29550 (US)
(72) Inventor: Truitt, Mary Katherine, Hartsville 29550 (US)
(74) Representative: Marks & Clerk LLP

(56) References cited:
- WO-A1-98/56686
- WO-A1-2016/144308
- DE-A1- 19 859 043
- GB-A- 2 380 180

## Description

### FIELD OF THE INVENTION

**The** present invention generally relates to recyclable packaging structures comprising a rigid resealable container which is closed with a flexible film.

### BACKGROUND OF THE INVENTION

Reclosable packages are widely used in the packaging of a variety of food and other products. Reclosable packages are convenient in that after the initial opening, consumers can close and reseal the package to better preserve the enclosed contents. Rigid packages are often utilized when the contents are fragile and/or could be easily crushed or broken. Rigid packages provide structural support to protect the contents of the package such that the contents remain intact during transportation, storage, and handling. Oftentimes, rigid packages are closed with flexible film which serves to contain, preserve, and protect the packaging contents. Flexible film is beneficial for such packaging structures because flexible film can be resealable, providing a longer shelf-life for the product contained therein.

Flexible film is not, however, recyclable through standard single stream recycling in the United States. The machinery in existing material recovery facilities is not capable of sorting flexible films, even if they are the correct mono-material film for a specific resin stream. Accordingly, even if the consumer is aware that the rigid tray is recyclable, the flexible film portion of a rigid packaging structure is often separated from the container by the consumer, disposed of with ordinary trash, and not recycled. WO 2016144308 describes a thermoplastic package that includes a tray and a lidding film that may be recycled in a polyethylene terephthalate (PET) recycling stream. GB 2380180 describes a resealable container that comprises an at least semi rigid receptacle with an opening, a lip surrounding the opening, a closure for closing the opening, and an adhesive which provides a releasable and resealable bond between the closure and the lip. DE 19859043 describes a resealable plastic packaging container consisting of a tray and a foil lid which in the sealing area is sealed to the tray such that it can be at least partly peeled back. WO 9856686 describes a package for a product consisting of a support for the product or dish and a plastic film or foil tied to the support for the product or plate by means of a weld seam.

### SUMMARY OF THE INVENTION

In an aspect, the present invention provides a resealable, recyclable container structure in accordance with claim 1.

The accompanying drawings, which are incorporated in and constitute a part of this specification, illustrate one or more embodiments of the invention and, together with the description, serve to explain the principles of the invention.

### BRIEF DESCRIPTION OF THE DRAWINGS

A full and enabling disclosure of the present invention, including the best mode thereof directed to one of ordinary skill in the art, is set forth in the specification, which makes reference to the appended drawings, in which:
FIG. 1 is a perspective view of a resealable packaging structure in a closed embodiment of the invention;
FIG. 2 is a perspective view of a resealable packaging structure in an open embodiment of the invention;
FIG. 3 is a cross-sectional view of a resealable packaging structure, taken along line A-A, shown in FIG. 1, in an embodiment of the invention; and

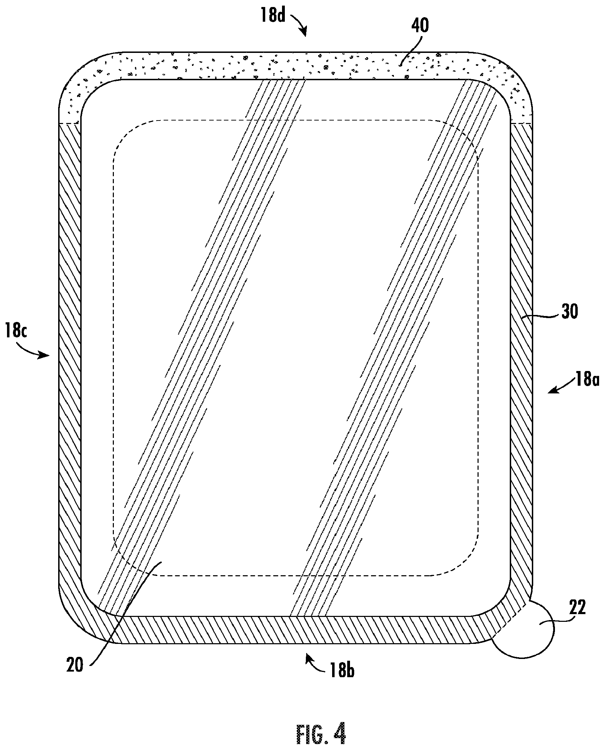

FIG. 4 is a top view of a resealable packaging structure in an embodiment of the invention.

Repeated use of reference characters in the present specification and drawings is intended to represent the same or analogous features or elements of the invention.

### DETAILED DESCRIPTION OF THE EMBODIMENTS

Reference will now be made in detail to presently preferred embodiments of the invention, one or more examples of which are illustrated in the accompanying drawings. Each example is provided by way of explanation of the invention, not limitation of the invention. In fact, it will be apparent to those skilled in the art that modifications and variations can be made in the present invention without departing from the scope thereof. For instance, features illustrated or described as part of one embodiment may be used on another embodiment to yield a still further embodiment. Thus, it is intended that the present invention covers such modifications and variations as come within the scope of the appended claims and their equivalents.

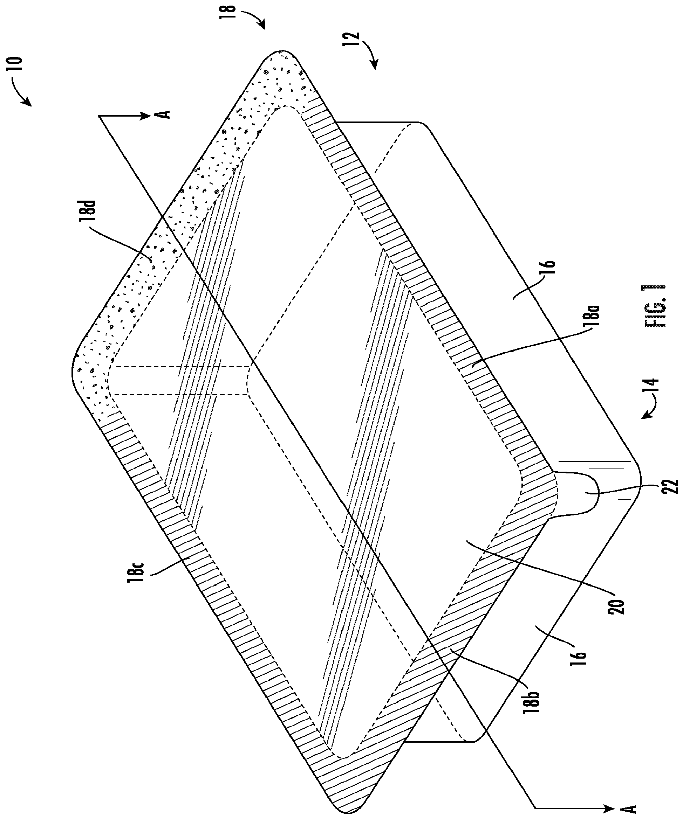

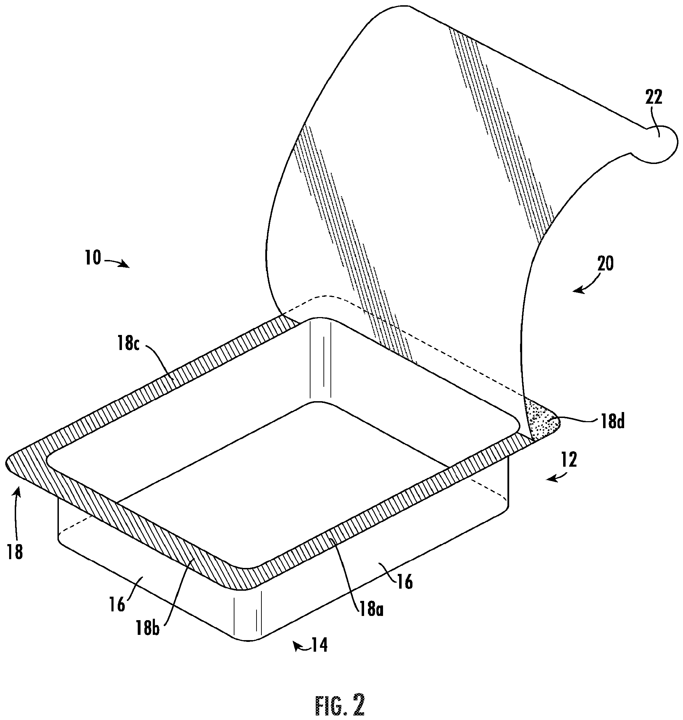

Turning to the drawings, FIGS. 1 and 2 illustrate an embodiment of the invention in a closed and open configuration, respectively. The inventive packaging structure 10 is illustrated as a tray 12 having a bottom 14 and four sides 16. However, this container shape should not be limiting and any container shape known in the art may be utilized. For example, the tray 12 could be a cylindrical, square, or triangular container in a given embodiment. In an embodiment, the rigid tray has at least a bottom wall and at least one wall extending upwardly therefrom.

In an embodiment, the at least one sidewall 16 of the tray 12 extends upwardly (or vertically) and terminates in a flange 18. In another embodiment, a flange 18 could be affixed to the sidewall 16. The flange 18 may extend outwardly (or horizontally) from the sidewall 16. In an embodiment, the flange 18 surrounds and defines an opening into the tray 12. In an embodiment, the flange 18 may include multiple flange portions 18a, 18b, 18c, and 18b which extend continuously around the periphery of the tray 12. The width of the flange 18 may vary based upon the dimensions of the tray 12 but should be sufficiently wide to accommodate sealing of a cover member thereto. Likewise, the thickness of the flange 18 may vary based upon the dimensions of the tray 12 and the containment needs thereof. In an embodiment, each of the multiple flange portions 18a, 18b, 18c, and 18b may be the same shape and size. In other embodiments, the multiple flange portions 18a, 18b, 18c, and 18b may have differing shapes and sizes. While four flange portions 18a, 18b, 18c, and 18b are shown, it should be understood that any number of flange portions are contemplated herein. For example, if the container is hexagonal in cross section, it may have six flange portions. If the container is cylindrical in cross section, it may have two flange portions or it may have five flange portions. Further, the flange portions need not match up with the sides of the container. For example, a square container may have five flange portions, wherein one of the flange portions comprises only a portion of the length of the sidewall. The flange portions may have different sizes and need not be the same length as a sidewall. Any combination of shape and number of flange portions is contemplated.

In an embodiment, a flexible film 20 is positioned over the tray 12 and adhered or sealed thereto. In an embodiment, the flexible film 20 is adhered to the flange 18. In other embodiments, the flexible film 20 may be adhered to a top edge or rim of the container.

In an embodiment, the flexible film 20 may be sealed to the tray 12 in a permanent manner along part of the flange, edge, or rim and adhered in a resealable manner along part of the flange, edge, or rim. That is, in a particular embodiment, the flexible film 20 may be resealably adhered to a plurality of the flange portions and permanently sealed to at least one flange portion. For example, in the embodiment shown, flange portions 18a, 18b, and 18c may be resealably adhered to the film 20 and flange portion 18d may be permanently adhered to the film 20.

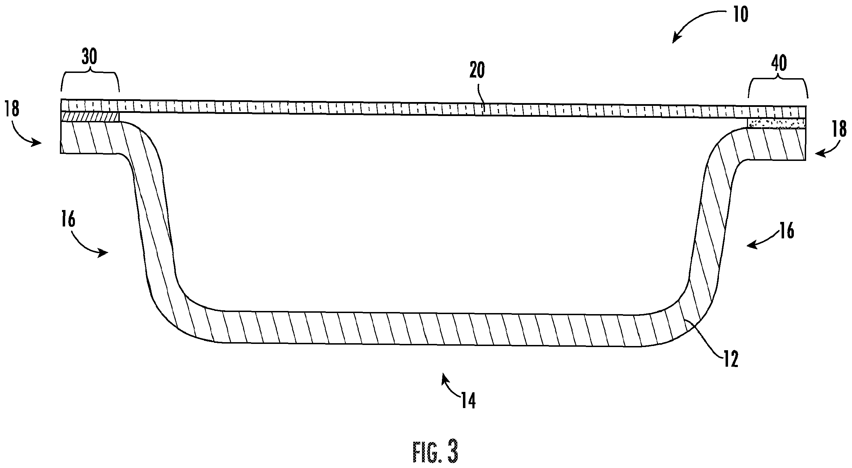

In an embodiment, the flange 18 may have a top surface. The flexible film 20 may be resealably adhered to a plurality of the flange portions, along their top surface, to form a resealable zone 30 (see FIG. 3). Similarly, the flexible film may be permanently sealed to at least one flange portion, along its top surface, to form a permanently adhered zone 40.

The resealable zone 30 may be easily peeled away from the tray 12 to reveal the contents of the container. The resealable zone 30 may additionally be replaceable back onto the flange 18 to reseal the film 20 to the tray 12. In an embodiment, in the permanently adhered zone 40, the film 20 may not be removed from the tray 12 without destruction of the film 20 and/or tray 12.

In an embodiment, the resealable zone 30 may comprise a majority of the flange surfaces. For example, if the tray 12 has a square or a rectangular cross-section, the resealable zone 30 may comprise approximately three of the four flange portions. In another example, the tray 12 may be cylindrical and the resealable zone 30 may comprise more than half of the circumference of the flange. In an embodiment, the permanently adhered zone 40 comprises a minority of the flange portions. In an embodiment, the permanently adhered zone 40 comprises one flange portion.

In an embodiment, the permanently adhered zone 40 comprises a portion, but not all, of the flange along one of the sidewalls of the container. In this embodiment, the resealable zone 30 may comprise all other portions of the flange. In an embodiment, the permanently adhered zone 40 comprises a corner of the container structure, along the flange. In this embodiment, the corner portion of the flange may be permanently affixed to the film 20, but the remainder of flange may be considered the resealable zone 30.

In an embodiment, an adhesive layer may be utilized to seal the flexible film 20 to the rigid tray 12. In this embodiment, a resealable adhesive, such as a pressure sensitive adhesive or a cohesive, may be utilized in the resealable zone 30. The adhesive(s) may be applied to either the relevant flange portions or the film 20, before application of the film 20 to the tray 12. In an embodiment, the adhesive(s) may be pattern applied to the film 20 around the perimeter thereof, such that the adhesive(s) do not extend into the central portion of the film 20. Any resealable adhesives known in the art may be utilized.

The flexible film 20 is inherently sealable to the rigid tray 12. That is, the film 20 itself is heat sealable, for example, to the flange 18. In this embodiment, at least the permanently adhered zone 40 is heat sealed to the flange 18. In this embodiment, the film 20 may be adhered to the flange 18 in the resealable zone 30 via a resealable adhesive, as described above. In this way, the film 20 may be easily removable from the flange 18 within the resealable zone, but not from the flange 18 within the permanently adhered zone 40.

In another embodiment, a sealant layer may be utilized to seal the flexible film 20 to the rigid tray 12. For example, the flexible film 20 may be co-extruded with a sealant layer in such an embodiment. The sealant layer may comprise a permanent sealant and/or a resealable sealant. In an embodiment, film 20 with the sealant disposed thereon may be utilized as is or may have another adhesive applied thereto. For example, a film 20 may be coextruded with a permanent sealant disposed along one edge of the perimeter. The film 20 may then be coated with a pressure sensitive adhesive along the other edge of the perimeter. The film 20 may then be applied to the flange 18 of a container. Thus, any combination of adhesives, sealants, heat seals, and/or other types of seals as specified in the claims may be utilized herein.

In an embodiment, a thumb tab 22 (or pull tab) may extend from an edge of the film. The thumb tab 22 may be adhesive-free, in an embodiment. The thumb tab 22 may be utilized to grip and pull the film 20 away from the flange 18. Likewise, in an embodiment, the central portion of the film 20 may be adhesive-free. In an embodiment, the central portion of the film 20 substantially aligns with the inner perimeter of the flange 18.

In an embodiment, the tray 12 is made from a polymeric material with a thickness providing for a rigid, or at least semi-rigid, reclosable package 10. When formed into the configuration of FIG. 1, the tray 12 has a substantial resistance to torsional and bending stresses thereby protecting the contents of the reclosable package 10. To add extra rigidity to the tray 12, strengthening ribs or other reinforcing structures may be utilized within the side walls 16. In an embodiment, the tray 12 is manufactured via thermoforming, injection molding, or blow molding.

In an embodiment, the flexible film 20 is a thin film polymer material which provides flexibility. The flexible film 20 comprises only one material - i.e. is a mono-material film. In other embodiments, the flexible film 20 may comprise multiple layers of the same polymeric material.

In a particular embodiment, the tray 12 and the film 20 are made from the same material. For example, each of the tray 12 and the film 20 could comprise polyethylene terephthalate ("PET"), the tray 12 being a rigid PET tray and the film 20 being a flexible PET lidding material. In this embodiment, the tray 12 and the film 20 can be recycled together without removing the film 20 from the tray 12. In an embodiment, the permanent adhesive, heat seal, lock-seal, or weld seal in the permanently adhered zone 40 is sufficiently strong to allow the film 20 to remain affixed to the tray 12 through a recycling sorting process, placing the film 20 and tray 12 into the correct recycling stream (PET, in this example).

Other polymeric materials may be suitable for the invention. For example, any of polystyrene, polypropylene, polyethylene, or polyvinyl chloride could be utilized to form a rigid tray 12 and a flexible lidding 20. In other embodiments, the tray 12 and the film 20 may comprise different polymeric materials.

In an embodiment, the flexible film 20 comprises a barrier layer. Any barrier known in the art which provides a barrier to the passage of gases, liquids, water vapor or the like may be utilized.

In use, in an embodiment, after the consumer has opened the lidding 20 and removed the desired amount of product from the package 12, the consumer may lower the lidding onto the flange 18 and apply pressure to the film 20. The package 12 is thus resealed to inhibit the passage of air and moisture into the contents.

These and other modifications and variations to the present invention may be practiced by those of ordinary skill in the art, without departing from the scope of the present invention, which is more particularly set forth in the appended claims. In addition, it should be understood that aspects of the various embodiments may be interchanged in whole or in part. Furthermore, those of ordinary skill in the art will appreciate that the foregoing description is by way of example only, and is not intended to limit the invention so further described in such appended claims. For example, while the layers are discussed in a particular order, it should be understood that the various layers could be reordered and still remain within the scope of the invention. Therefore, the scope of the appended claims should not be limited to the description of the versions contained therein.

## Claims

1. A resealable, recyclable container structure comprising:
a polymeric rigid tray (12) comprising a bottom wall (14) and at least one upwardly extending sidewall (16), wherein the at least one sidewall (16) terminates in a flange (18) and wherein the flange (18) comprises at least one resealable zone (30) and at least one permanently affixed zone (40); and
a flexible polymeric film lidding (20), wherein the lidding (20) is permanently affixed to the flange (18) in the permanently affixed zone (40) and resealably affixed to the flange (18) in the resealable zone (30), wherein the flexible polymeric film lidding (20) is heat sealable, and wherein the flexible polymeric film lidding (20) is heat sealed directly to the polymeric rigid tray (12) in the permanently affixed zone (40),
wherein the polymeric rigid tray (12) and the polymeric film lidding (20) comprise the same polymer, and
wherein the polymeric film lidding (20) is a mono-material.

2. The container structure of claim 1 wherein the polymer is selected from the group polyethylene terephthalate, polyethylene, and polypropylene.

3. The container structure of claim 1 wherein a pressure sensitive adhesive is disposed between the lidding (20) and the flange (18) in the resealable zone (30).

4. The container structure of claim 1 wherein the tray (12) comprises four sidewalls and the permanently affixed zone of the flange is aligned with one of the four sidewalls.

5. The container structure of claim 4, wherein the resealable zone (30) is aligned with three of the four sidewalls.

6. The container structure of claim 1 wherein the flange (18) has a top surface and the permanently affixed zone (40) and the resealable zone (30) are located on the top surface of the flange (18).

7. The container structure of claim 1 wherein the lidding (20) is coextruded with at least one sealant.

8. The container structure of claim 1 wherein the lidding (20) additionally comprises a thumb tab.

## Patentansprüche

1. Wiederverschließbare, recycelbare Behälterstruktur, Folgendes umfassend:
eine starre Polymerauflage (12), umfassend eine Bodenwand (14) und mindestens eine sich nach oben erstreckende Seitenwand (16), wobei die mindestens eine Seitenwand (16) in einem Flansch (18) endet und wobei der Flansch (18) mindestens eine wiederverschließbare Zone (30) und mindestens eine dauerhaft befestigte Zone (40) umfasst; und
eine flexible Polymer-Folienabdeckung (20), wobei die Abdeckung (20) in der dauerhaft befestigten Zone (40) dauerhaft an dem Flansch (18) befestigt ist und in der wiederverschließbaren Zone (30) wiederverschließbar an dem Flansch (18) befestigt ist, wobei die flexible Polymer-Folienabdeckung (20) heißversiegelt ist, und wobei die flexible Polymer-Folienabdeckung (20) in der dauerhaft befestigten Zone (40) direkt an der starren Polymerauflage (12) heißversiegelt ist,
wobei die starre Polymerauflage (12) und die Polymer-Folienabdeckung (20) das gleiche Polymer umfassen, und
wobei die Polymer-Folienabdeckung (20) aus einem einzigen Material besteht

2. Behälterstruktur nach Anspruch 1, wobei das Polymer aus der Gruppe Polyethylenterephthalat, Polyethylen und Polypropylen ausgewählt ist.

3. Behälterstruktur nach Anspruch 1, wobei ein Haftkleber zwischen der Abdeckung (20) und dem Flansch (18) in der wiederverschließbaren Zone (30) angeordnet ist.

4. Behälterstruktur nach Anspruch 1, wobei die Auflage (12) vier Seitenwände umfasst und die dauerhaft befestigte Zone des Flansches mit einer der vier Seitenwände ausgerichtet ist.

5. Behälterstruktur nach Anspruch 4, wobei die wiederverschließbare Zone (30) mit drei der vier Seitenwände ausgerichtet ist.

6. Behälterstruktur nach Anspruch 1, wobei der Flansch (18) eine obere Oberfläche aufweist und sich die dauerhaft befestigte Zone (40) und die wiederverschließbare Zone (30) auf der oberen Oberfläche des Flansches (18) befinden.

7. Behälterstruktur nach Anspruch 1, wobei die Abdeckung (20) mit mindestens einem Dichtungsmittel gemeinsam extrudiert ist.

8. Behälterstruktur nach Anspruch 1, wobei die Abdeckung (20) zusätzlich eine Daumenlasche umfasst.

## Revendications

1. Structure de récipient recyclable, refermable, comprenant :
un plateau rigide en polymère (12) comprenant une paroi inférieure (14) et au moins une paroi latérale (16) s'étendant vers le haut, dans laquelle l'au moins une paroi latérale (16) se termine par une bride (18) et dans laquelle la bride (18) comprend au moins une zone refermable (30) et au moins une zone fixée de manière permanente (40) ; et
un opercule en film polymère flexible (20), dans laquelle l'opercule (20) est fixé de manière permanente à la bride (18) dans la zone fixée de manière permanente (40) et fixé de manière refermable à la bride (18) dans la zone refermable (30), dans laquelle l'opercule en film polymère flexible (20) peut être thermoscellé, et dans lequel l'opercule en film polymère flexible (20) est thermoscellé directement sur le plateau rigide en polymère (12) dans la zone fixée de manière permanente (40),
dans laquelle le plateau rigide en polymère (12) et l'opercule en film polymère (20) comprennent le même polymère, et
dans lequel l'opercule en film polymère (20) est en un matériau unique.

2. Structure de récipient selon la revendication 1, dans laquelle le polymère est sélectionné dans le groupe polyéthylène téréphtalate, polyéthylène, and polypropylène.

3. Structure de récipient selon la revendication 1, dans laquelle un adhésif sensible à la pression est disposé entre le couvercle (20) et la bride (18) dans la zone refermable (30).

4. Structure de récipient selon la revendication 1, dans laquelle le plateau (12) comprend quatre parois latérales et la zone fixée de manière permanente de la bride est alignée avec l'une des quatre parois latérales.

5. Structure de récipient selon la revendication 4, dans laquelle la zone refermable (30) est alignée avec trois des quatre parois latérales.

6. Structure de récipient selon la revendication 1, dans laquelle la bride (18) présente une surface supérieure et la zone fixée de manière permanente (40) et la zone refermable (30) sont situées sur la surface supérieure de la bride (18).

7. Structure de récipient selon la revendication 1, dans laquelle l'opercule (20) est coextrudé avec au moins un produit d'étanchéité.

8. Structure de récipient selon la revendication 1, dans laquelle l'opercule (20) comprend en outre une languette de pouce.
